# EUROPÄISCHE PATENTSCHRIFT

(11) **EP 0 941 262 B1**
(45) Veröffentlichungstag und Bekanntmachung des Hinweises auf die Patenterteilung: **19.12.2001**
(21) Anmeldenummer: 97948909.3
(22) Anmeldetag: 10.11.1997
(51) Int. Cl.: C08G 18/10

(54) **ZWEISTUFIGES VERFAHREN ZUR FERTIGUNG VON HALBHARTEN MASSIVEN POLYURETHAN-FORMKÖRPERN**
TWO STEP PROCEDURE FOR THE PRODUCTION OF SEMI-HARD SOLID POLYURETHANE MOULDED BODIES
PROCEDE EN DEUX ETAPES POUR PRODUIRE DES CORPS MOULES EN POLYURETHANE MASSIFS SEMI-DURS

(30) Priorität: 20.11.1996 DE 19648012
(43) Veröffentlichungstag der Anmeldung: 15.09.1999
(73) Patentinhaber: BAYER AG, 51368 Leverkusen (DE)
(72) Erfinder: MICHELS, Erhard, D-51065 Köln (DE); PLEISS, Klaus, D-51469 Bergisch Gladbach (DE); SCHOLTIS, Franz, D-51381 Leverkusen (DE)
(86) Internationale Anmeldenummer: EP9706232
(87) Internationale Veröffentlichungsnummer: WO9822519

(56) Entgegenhaltungen:
- DE-A- 2 649 739
- US-A- 4 306 052
- US-A- 4 521 582

## Beschreibung

Die Erfindung betrifft ein Verfahren zur Herstellung von massiven, transparenten bis transluzenten Polyurethan-Formkörpern, die aufgrund ihrer elastischen und optischen Eigenschaften z.B. als Alternativmaterial zu Gummi eingesetzt werden können.

Zur Fertigung transparent halbharter PU-Formteile werden üblicherweise PUR-Reaktionsmassen auf Polyesterpolyolbasis eingesetzt. Sie eignen sich besonders in der Formteilfertigung nach dem Gieß- und/oder Injektionsverfahren, da sich mit diesen über einen großen Systemvariationsbereich hinsichtlich Materialhärte und Verfestigungszeit gute Ergebnisse erzielen lassen. Ein besonderer Aufwand hinsichtlich der Maschinen-, Einfüll-, Form- und Formenverschlußtechnik ist dabei in der Regel nicht üblich, kann aber in Einzelfällen angebracht sein.

Auch der Einsatz von PUR-Reaktionsmassen auf Polyetherpolyolbasis ist bekannt, wird aber oftmals nicht gewählt, da sich nur mit erhöhtem technischen Aufwand ein zufriedenstellender und kontinuierlich erzielbarer hoher Transparenzgrad verwirklichen läßt. Die Fertigung nach dem RIM-Verfahren mit Reaktionsmassen, die sowohl reaktive Hydroxy- wie Aminendgruppen aufweisen sowie die Zuhilfenahme besonderer Formen- und Verschlußapparate, wie sie gemäß EP 0 299 117 A1 beschrieben wurderf, seien hierzu genannt. Letztlich bot sich aber bei Einsatz von PUR-Formmassen auf Polyetherpolyolbasis stets nur ein kleines Verarbeitungsfenster, so daß demgegenüber PUR-Systeme auf Polyesterpolyolbasis stets bevorzugt eingesetzt wurden. Dies erstaunlicherweise auch, wenn es sich um Anwendungen in exponierten Bereichen handelt, in denen eine hydrolytisch-mikrobielle Zersetzung der Ester-Komponenten nur durch Einbringung oftmals kostenintensiver Schutzadditive behindert wird.

US-A 4 521 582 beschreibt ein zweistufiges Verfahren zur Herstellung von Polyurethanen, bei dem in der ersten Stufe ein Polytherpolyol mit einem Diisocyanat zu einem OH-Prepolymer umgesetzt und dieses Prepolymer in der zweiten Stufe mit Naphthylen-1,5-diisocyanat weiter umgesetzt wird.

Aus DE-OS 26 49 739 geht ein Verfahren hervor, bei dem eine Mischung eines durch Umsetzung von überschüssigem Polyol mit Polyisocyanaten hergestellten OH-Prepolymers, eines aromatischen Diamins und eines Polyols, das ein hydroxyfunktionelles Polybutadien, ein Polyether- oder ein Polyesterpolyol sein kann, mit Polyisocyanat umgesetzt wird.

Es wurde nun gefunden, daß sich überraschend PUR-Formmassen auf Ether-Polyolbasis in gleicher Weise günstig zu transparenten/transluzenten Formteilen verarbeiten lassen wie diejenigen auf Ester-Basis, wenn sie durch eine erste Verfahrensstufe auf ein deutlich erhöhtes mittleres Molekulargewicht und eine damit verbundene erhöhte Viskosität gebracht wurden. Als derartige Verfahrensstufe eignet sich wie hier folgend beschrieben besonders die Umsetzung mit Di- und/ oder höherfunktionellen Isocyanat-Endgruppen-haltigen Komponenten zu sogenannten OH-Prepolymeren. Auch eine Reaktion mit Di- und/oder höherfunktionellen Carbonsäuren zu vergleichbar verlängerten Ether-/Ester-Polyolen erweist sich als geeignet.

Gegenstand der Erfindung ist somit ein zweistufiges Verfahren zur Herstellung von kompakten, transparenten PUR-Formteilen nach dem Polyisocyanat-Polyadditionsverfahren in einer Härte von 40 bis 90 Shore A durch Umsetzung von
a) organischen und/oder modifizierten organischen Polyisocyanaten mit
b) mindestens einer höhermolekularen Verbindung mit mindestens zwei reaktiven Wasserstoffatomen und gegebenenfalls
c) niedermolekularen Kettenverlängerungs- und/oder Vernetzungsmitteln in Gegenwart von
d) Katalysatoren und
e) Hilfsmitteln und Zusatzstoffen,
dadurch gekennzeichnet, daß man als mindestens eine höhermolekulare Verbindung mit mindestens zwei reaktiven Wasserstoffatomen (b) das Reaktionsprodukt aus
(I) einem linearen EO/PO-Polyetherpolyol mit endständigen EO-Gruppen und einem EO/PO-Verhältnis von 15:85 bis 40:60, einer OH-Zahl von 56-28 und Funktionalität von 2,0,
   oder
(II) einem Gemisch eines wie unter (I) angeführten Polyetherpolyols mit einem weiteren, aber höherfunktionellem und z.B. mit Glyzerin, Trimethylolpropan, Pentaerythrit oder auch Zucker gestartetem EO/PO-Polyetherpolyol (EO/PO-Verhältnis 15:85 bis 40:60) mit einer OH-Zahl von 60-25,
   oder
(III) Gemischen mehrerer linearer und verzweigter Polyetherpolyole, die jeweils wie unter (I) und (II) beschrieben, zusammengesetzt sind,
   umgesetzt mit

(A) TDI (2,4-TDI zu 2,6-TDI in jedem Verhältnis) sowie daraus erhältlichen Prepolymeren,
   oder
(B) TDI-Mehrkernisocyanaten sowie den daraus erhältlichen Prepolymeren,
   oder
(C) MDI (4,4'-MDI, 2,4'-MDI, 2,2'-MDI in jedem Verhältnis) sowie daraus erhältlichen Prepolymeren,
   oder
(D) MDI-Mehrkernisocyanaten sowie den daraus erhältlichen Prepolymeren,
   oder
(E) allen weiteren, großtechnisch erhältlichen aromatischen Isocyanaten mit einer Funktionalität von mindestens 2 (NDI, p-PDI), sowie den daraus erhältlichen Prepolymeren,
   oder
(F) allen weiteren großtechnisch erhältlichen aliphatischen Isocyanaten mit einer Funktionalität von mindestens 2 (IPDI, HDI, H-MDI), sowie den daraus erhältlichen Prepolymeren,
   oder
(G) Isocyanatmischungen aus (A) bis (F).

Die jeweils angeführten Prepolymere in (A) bis (G) werden z.B. durch Umsetzung der Isocyanate mit einem wie unter (I) bis (III) beschriebenen Etherpolyol erhalten und zeichnen sich durch endständige, reaktionsfähige NCO-Gruppen aus.

Eine Umsetzung der unter (I) bis (III) beschriebenen Polyole ist ebenfalls, statt mit Isocyanaten, möglich mit (AA)Di- und/oder höherfunktionellen Carbonsäuren wie z.B. Adipinsäure, Glutarsäure, Bernsteinsäure und weiteren Vertretern dieser Stoffklasse sowie auch deren Gemischen.

Ferner können noch "kurzkettige" Reaktionsbestandteile wie H₂O, di- und trifunktionelle OH-Verbindungen, OH-Amine, Di- und Triamine etc. mit zur Vorreaktion eingesetzt werden und mitreagiert haben und die Eigenschaften des folgend zum Polyurethan umgesetzten Materials gezielt ändern.

Der Ablauf der ersten Reaktionsstüfe zum Polyol, wie oben beschrieben. bedarf zwar im Fall der Reaktion von Diol etc. mit Diisocyanat nicht unbedingt einer katalytischen Beschleunigung, verläuft aber nach Zusatz von Aminen, Metallsalzen etc. wesentlich schneller.

Bei der Ether-Ester-Umsetzung (AA) sind typische Ester-Katalysatoren (Sn-, Ti-Derivate) zu bevorzugen. Die Reaktionstemperaturen liegen bevorzugt bei 20 bis 100°C (Typ A-G), sind aber auch höher möglich und in Situation (AA) auch vorteilhaft.

Die resultierende OH-Zahl des o.a. Umsetzungsproduktes liegt zwischen 7 bis 50 mg KOH/g, bevorzugt zwischen 10 bis 28 mg KOH/g. Die Viskosität des Ausgangsproduktes wird im üblichen Temperatur-Einsatzbereich von 20 bis 50°C durch das Verfahren deutlich erhöht.

Da auch, wie angeführt, niedermolekulare Hydroxy- und Amin-Endgruppen-haltige Bausteine, sogar H₂O, mit in die beschriebene Vorreaktion eingebracht werden können, kann die Reaktion auch von einem höheren OH- bzw. OH-/NHX-Gruppengehalt gestartet werden. Die Viskosität ist entsprechend modifiziert zu erreichen.

### Beispiele

### 1. OH-Prepolymer-Beispiele

### Beispieltabelle

| | 1.1 | 1.2 | 1.3 | |
|---|---|---|---|---|
| Basisether (a) EO/PO = (25:75) (OH-Z: 28 mg KOH/g) | 98,95 | 97,95 | 98,65 | Gew.-% |
| TDI | 1,00 | | | Gew.-% |
| MDI-Prepolymer (20 % NCO) | | 2,0 | | Gew.-% |
| IPDI | | | 1,3 | Gew.-% |
| Dabco (krist.) | 0,05 | 0,05 | 0,05 | Gew.-% |
| Viskosität: Reaktionsbeginn | 270 | 275 | 265 | mPa.s |
| (50°C): Reaktionsende | 740 | 710 | 650 | mPa.s |
| OH-Zahl des Reaktionsproduktes | 22 | 22 | 22 | mg KOH/g |

1.1 Durchführung:
   Nach Vorlage der OH-Komponenten und Temperierung auf 50°C wird der Dabco-Anteil gelöst und folgend die Isocyanatkomponente zugesetzt. Nach ca. 2 h wird die Viskosität bestimmt, die sich unverändert auch nach 1 d und 7 d auf gleichem Niveau befindet.
1.2 Ebenfalls möglich ist die anteilige Vorlage reaktiver OH-Komponenten, so daß ein aufkonzentriertes Reaktionsgemisch vorliegt, das ebenfalls bei 50°C mit dem Dabco und der Isocyanatkomponente versetzt wird. Nach Abreaktion wird die restliche Menge der OH-reaktiven Komponente zugesetzt und man erhält ein gleich nach dem Verfahren 1,1 hergestelltes Produkt.

### 2. Umsetzungsbeispiele

2.1 Das unumgesetzte Basispolyol (a) der Beispieltabelle 1 wird mit folgenden Reaktionspartnern umgesetzt:

| | | |
|---|---|---|
| A-Komponente | Polyol (a) | 93,87 |
| | Butandiol-1,4 | 6,00 |
| | DBTL | 0,03 |
| | Dabco (krist.) | 0,10 |
| B-Komponente | MDI-Prepolymer aus 4,4'-MDI, Desmodur CD und Etherpolyol (a) mit einem NCO-Gehalt von 20 %. | |
| Materialtemperaturen | je 35°C | |

Die Mischung A:B im Verhältnis 100:38 wird mit einer üblichen Niederdruckmaschine verarbeitet und in eine Form gegossen und verschlossen. Das Formteil mit einer Materialstärke von 5 mm und Dichte von 1100 kg/m³ kann nach 4 Min. entformt werden, weist aber keine Transparenz auf, sondern ist weißlich trüb.
2.2 Das Umsetzungsprodukt aus Beispiel 1.1 wird in vorheriger Rezeptur eingesetzt. Bei gleicher Vorgehensweise und Berücksichtigung der geringeren OH-Zahl des jetzt eingesetzten OH-Prepolymeren (A.B = 100:36) läßt sich nach 4 Min. ein transparentes Formteil entformen.
2.3 Als Rezepturvariante für den Direktansohlungsprozeß wird folgende Variante gewählt:

| | | |
|---|---|---|
| A-Komponente | Polyol (a) | 92,97 |
| | Butandiol-1,4 | 6,00 |
| | Ethandiol | 0,50 |
| | DBTL | 0,03 |
| | Dabco (krist.) | 1,00 |
| B-Komponente | (s. Beispiel 2,1) | |
| Materialtemperaturen | je 35°C | |

Das durch Schneckenvermischung nach dem Desma-Verfahren bereitete Reaktionsgemisch (A:B = 100:41) wird in eine auf ca. 50°C temperierte Form eingetragen und die Form nach dem Desma-Verfahren verschlossen.
Nach ca. 2,5 Min. wird die Form geöffnet und man erhält ein trüb-weißes Formteil, an das im Folgeschritt ein weiteres PUR-Material angespritzt werden könnte.
2.4 Wie unter 2.3 beschrieben, bei Austausch des Polyols (a) gegen das Polyol (1.1), läßt sich beim nachgeregelten Mischungsverhältnis (A:B = 100:39) nach 2,5 Min. jetzt aber ein transparentes Formteil entformen, an das ebenfalls im Folgeschritt ein weiteres PUR-Material angespritzt werden kann.

## Patentansprüche

1. Zweistufiges Verfahren zur Fertigung von halbharten massiven Polyurethan-Formkörpern, die eine hohe Transparenz auch bei unterschiedlicher Formteildicke aufweisen, bei dem
(1) in einer ersten Stufe eine Polyetherpolyol-Komponente b) enthaltend mindestens ein lineares EO/PO-Polyetherpolyol mit endständigen EO-Gruppen und einem EO/PO-Verhältnis von 15:85 bis 40:60, einer OH-Zahl von 56 bis 28 und einer Funktionalität von 2,0 und gegebenenfalls mindestens ein höherfunktionelles Polyetherpolyol mit einem EO/PO-Verhältnis von 15:85 bis 40:60, einer OH-Zahl von 60 bis 25, mit OH-reaktiven Reaktionspartnern zu einem OH-Endgruppen-haltigen OH-Prepolymer umgesetzt wird, das eine OH-Zahl von 7 bis 56 mg KOH/g aufweist und keine reaktionsfähigen NCO-Gruppen mehr enthält und
(2) dieses Prepolymer in einer zweiten Stufe mit
a) organischen und/oder modifizierten organischen (Poly)-isocyanaten und gegebenenfalls
c) niedermolekularen Kettenverlängerungs- und/oder Vernetzungsmitteln in Gegenwart von
d) Amin- und/oder Metallsalzkatalysatoren und
e) Hilfsmitteln und Zusatzstoffen
zu einem transparenten halbharten massiven Polyurethan-Formkörper umgesetzt wird.

2. Verfahren gemäß Anspruch 1, bei dem die Polyetherpolyol-Komponente b) anteilig kurzkettige Reaktionsbestandteile enthält, die auch mit zur Reaktion zum OH-Prepolymer gebracht werden.

3. Verfahren gemäß Anspruch 1 oder 2, bei dem in der ersten Stufe als OH-reaktive Reaktionspartner Di- und/oder höherfunktionelle Carbonsäuren eingesetzt werden.

4. Verfahren gemäß Anspruch 3, bei dem das in der ersten Stufe erhaltene Prepolymer keine freien reaktionsfähigen Carbonsäuregruppen mehr enthält.

5. Verfahren gemäß Anspruch 1 zur Fertigung von Schuhsohlen, Schuhsohlenbauteilen, technischen Dichtungen oder mechanisch belasteten Rollkörpern.

## Claims

1. A two-stage process for manufacturing semi-rigid, solid polyurethane molded items which have a high transparency, even with different thicknesses of molded item, in which
(1) in a first step, a polyetherpolyol component b) containing at least one linear EO/PO polyetherpolyol with terminal EO groups and an EO/PO ratio of 15:85 to 40:60, an OH value of 56 to 28 and a functionality of 2.0 and optionally at least one higher-functional polyetherpolyol with an EO/PO ratio of 15:85 to 40:60, an OH value of 60 to 25, is reacted with OH-reactive reaction partners to give an OH terminal group-containing OH prepolymer which has an OH value of 7 to 56 mg KOH/g and no longer contains any reactive NCO groups and
(2) this prepolymer, in a second step, is reacted with
a) organic and/or modified organic (poly)isocyanates and optionally
c) low molecular weight chain-extending and/or cross-linking agents in the presence of
d) amine and/or metal salt catalysts and
e) auxiliary substances and additives, to give a transparent, semi-rigid solid polyurethane molded item.

2. A process according to Claim 1, in which the polyetherpolyol component b) contains a small proportion of short-chain reaction constituents which are also reacted to give the OH prepolymer.

3. A process according to Claim 1 or 2, in which in the first step difunctional and/or higher-functional carboxylic acids are used as OH-reactive reaction partners.

4. A process according to Claim 3, in which the prepolymer obtained in the first step no longer contains any reactive carboxylic acid groups.

5. A process according to Claim 1 for manufacturing soles of shoes, parts of soles of shoes, industrial seals or rollers which are subject to mechanical stress.

## Revendications

1. Procédé à deux stades opératoires pour former des objets façonnés massifs semi-durs en polyuréthanne, à haute transparence même à des épaisseurs différentes de la pièce, dans lequel
(1) dans un premier stade opératoire, on fait réagir un composant polyéther-polyol b) contenant au moins un polyéther-polyol OE/OP linéaire à groupes terminaux OE et au rapport OE/OP de 15:85 à 40:60, un indice d'OH de 56 à 28 et une fonctionnalité de 2,0 et le cas échéant au moins un polyéther-polyol à fonctionnalité plus forte, au rapport OE/OP de 15:85 à 40:60, indice d'OH 60 à 25, avec des partenaires à groupes OH réactifs, pour formation d'un prépolymère à groupes OH contenant des groupes OH terminaux, avec un indice d'OH de 7 à 56 mg de KOH/g, mais ne contenant plus de groupes NCO réactifs et
(2) dans un deuxième stade opératoire, on fait réagir ce prépolymère avec
a) des (poly)isocyanates organiques et/ou organiques modifiés et le cas échéant
c) des agents d'allongement des chaînes et/ou des agents réticulants à bas poids moléculaire en présence de
d) des catalyseurs du type amines et/ou sels métalliques et
e) des produits auxiliaires et additifs,
la réaction donnant un objet façonné massif semi-dur transparent de polyuréthanne.

2. Procédé selon la revendication 1, dans lequel le composant polyéther-polyol b) contient en partie des constituants réactifs à chaîne courte qu'on fait réagir également avec formation du prépolymère à groupes OH.

3. Procédé selon la revendication 1 ou 2, dans lequel, au premier stade, les partenaires à groupes OH réactifs mis en oeuvre sont des acides carboxyliques difonctionnels et/ou à fonctionnalité plus forte.

4. Procédé selon la revendication 3, dans lequel le prépolymère obtenu au premier stade ne contient plus de groupes acide carboxylique réactifs libres.

5. Procédé selon la revendication 1, pour la fabrication de semelles de chaussures, de pièces de semelles de chaussures, la réalisation d'étanchéités industrielles ou la fabrication de galets ou poulies subissant des charges mécaniques.
